# EUROPEAN PATENT APPLICATION

(11) **EP 4 822 654 A1**
(43) Date of publication of application: **14.10.2026**
(21) Application number: 26164953.7
(22) Date of filing: 16.03.2026
(51) Int. Cl.: G06V 10/82

(54) **METHOD AND SYSTEM FOR ESTABLISHING WIDELY USED TWO-DIMENSIONAL TO THREE-DIMENSIONAL IMAGE MODEL**

(30) Priority: 27.03.2025 TW 114111734
(71) Applicant: Acer Incorporated, New Taipei City 221 (TW)
(72) Inventor: LIN, Kai-Hsiang, New Taipei City 221 (TW); CHOU, Hung-Chun, New Taipei City 221 (TW); TSAI, Tung-Chan, New Taipei City 221 (TW); LIN, Shih-Hao, New Taipei City 221 (TW); WANG, Chieh-Sheng, New Taipei City 221 (TW); HSU, Wen-Cheng, New Taipei City 221 (TW)
(74) Representative: dompatent

(57) **Abstract**

A method and a system for establishing a 2D-to-3D image model are provided. The method for establishing the 2D-to-3D image model includes the following steps. A 2D-to-3D image model training process is performed through a training dataset to obtain a plurality of candidate models. The candidate models are tested via a plurality of testing datasets to obtain a plurality of accuracy scores. The accuracy scores are sorted according to each of the testing datasets to obtain a plurality of accuracy rankings for the candidate models. The accuracy rankings are normalized for each of the testing datasets to obtain a plurality of standardization indicators. A comprehensive calculation is performed on the standardization indicators corresponding the testing datasets for each of the candidate models to obtain a total index score. One is selected from the candidate models according to the total index scores to obtain the 2D-to-3D image model.

## Description

### TECHNICAL FIELD

The disclosure relates in general to an establishing method and an establishing system, and more particularly to a method and a system for establishing a widely used two-dimensional to three-dimensional image model.

### BACKGROUND

With the rapid development of stereoscopic display technology, various stereoscopic displays are constantly being innovated. In a stereoscopic display, in order for viewers to experience stereoscopic vision, a 3D image with parallax or depth information must be input to present the image. Generally speaking, 3D images with parallax or depth information could be captured by stereoscopic cameras or stereoscopic cameras.

Currently, stereo cameras or stereo camcorders are expensive, and the 3D images they can obtain are quite scarce. Therefore, the industry uses 2D-to-3D model conversion to transform existing 2D images into 3D images in order to expand the resources that stereo displays can present.

However, obtaining training datasets for 2D-to-3D image models is extremely difficult. With limited training datasets, it's challenging to train a 2D-to-3D image model applicable to various scenes and materials. Furthermore, during iterative training, it's often difficult to determine at which stage the training results will yield the optimal 2D-to-3D image model. For a long time, these technical bottlenecks have been difficult to overcome, resulting in a very slow development of 2D-to-3D image conversion technology.

### SUMMARY

The disclosure is directed to a method and a system for establishing a widely used two-dimensional to three-dimensional image model. By testing and evaluating various testing datasets, it could train a 2D-to-3D image model that can be applied to various scenes and materials with a limited training dataset.

According to one embodiment, a method for establishing a 2D-to-3D image model is provided. The method for establishing the 2D-to-3D image model includes the following steps. A training dataset is obtained. A 2D-to-3D image model training process is performed through the training dataset to obtain a plurality of candidate models. The candidate models are tested via a plurality of testing datasets to obtain a plurality of accuracy scores. The accuracy scores of the candidate models are sorted according to each of the testing datasets to obtain a plurality of accuracy rankings for the candidate models corresponding to each of the testing datasets. The accuracy rankings of the candidate models are normalized for each of the testing datasets to obtain a plurality of standardization indicators of the candidate models. A comprehensive calculation is performed on the standardization indicators corresponding the testing datasets for each of the candidate models to obtain a total index score for each of the candidate models. One is selected from the candidate models according to the total index scores of the candidate models to obtain the 2D-to-3D image model.

According to another embodiment, a system for establishing a 2D-to-3D image model is provided. The system includes a training unit, a testing unit, a ranking unit, a normalizing unit, a comprehensive calculation unit and a selecting unit. The training unit is used to perform a 2D-to-3D image model training process through a training dataset with random optimization to obtain a plurality of candidate models. The testing unit is used to test the candidate models via a plurality of testing datasets to obtain a plurality of accuracy scores. The ranking unit is used to sort the accuracy scores of the candidate models according to each of the testing datasets to obtain a plurality of accuracy rankings for the candidate models corresponding to each of the testing datasets. The normalizing unit is used to normalize the accuracy rankings of the candidate models for each of the testing datasets to obtain a plurality of standardization indicators of the candidate models. The comprehensive calculation unit is used to perform a comprehensive calculation on the standardization indicators corresponding the testing datasets for each of the candidate models to obtain a total index score for each of the candidate models. The selecting unit is used to select one from the candidate models according to the total index scores of the candidate models to obtain the 2D-to-3D image model.

### BRIEF DESCRIPTION OF THE DRAWINGS

Figure 1 illustrates the training process of a 2D-to-3D image model according to an embodiment.
Figure 2 illustrates a block diagram of a system for establishing a 2D-to-3D image model according to an embodiment of the present disclosure.
Figure 3 illustrates a flowchart of a method for establishing the widely used 2D-to-3D image model according to an embodiment of this disclosure.
Figure 4 illustrates each step of Figure 3.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

The technical terms used in this specification refer to the idioms in this technical field. If there are explanations or definitions for some terms in this specification, the explanation or definition of this part of the terms shall prevail. Each embodiment of the present disclosure has one or more technical features. To the extent possible, a person with ordinary skill in the art may selectively implement some or all of the technical features in any embodiment, or selectively combine some or all of the technical features in these embodiments.

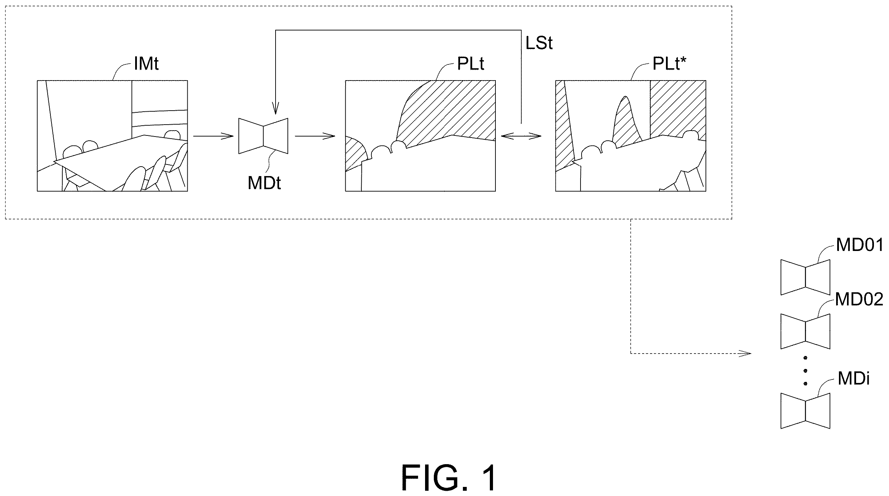

Please refer to Figure 1, which illustrates the training process of a 2D-to-3D image model MDt according to an embodiment. During training, the 2D image IMt used for training is inputted into the 2D-to-3D image model MDt to generate a 3D image PLt with disparity information or depth information. After comparing the generated 3D image PLt with the real 3D image PLt*, the loss value LSt could be obtained. For example, based on the monocular 2D depth estimation neural network model architecture and the definition of the loss function, the stochastic gradient descent (SGD) optimization algorithm in machine learning is used to optimize the parameters of the 2D-to-3D image model MDt and gradually reduce the loss value LSt of the loss function. The goal of optimization is to minimize the difference between the 3D image PLt generated by the 2D-to-3D image model MDt and the real 3D image PLt*.

Loss functions could be, for example, Depth Estimation Losses or Relative Depth Losses.

Depth estimation losses include L1/L2 loss (Mean Absolute Error, Mean Squared Error), Absolute Relative Error (AbsRel), or Gradient Smoothness Loss. Relative depth losses include WHDR loss (Weighted Human Disagreement Rate Loss).

During training, after a certain number of iterations, a plurality of candidate models MD01, MD02, ..., MDi could be obtained at different training stages. The model with more iterations is not necessarily the optimal model. Moreover, with a limited training dataset, it is difficult to train a model that can be used in various scenarios and with various materials.

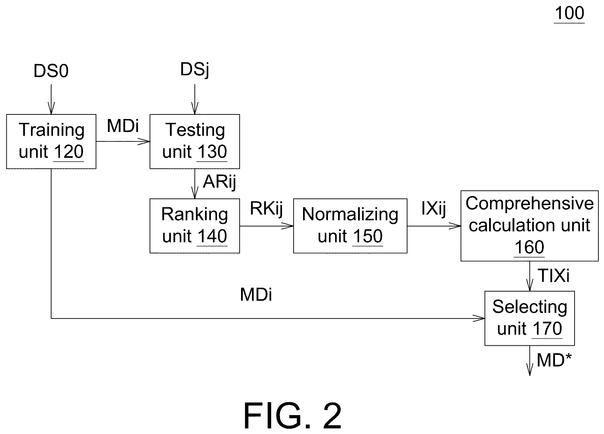

Please refer to Figure 2, which illustrates a block diagram of a system 100 for establishing a 2D-to-3D image model MD* according to an embodiment of the present disclosure. The system 100 includes a training unit 120, a testing unit 130, a ranking unit 140, a normalizing unit 150, a comprehensive calculation unit 160, and a selecting unit 170. The training unit 120 is used for model training. The testing unit 130 is used for testing procedures. The ranking unit 140 is used for data sorting. The normalizing unit 150 is used for data normalization. The comprehensive calculation unit 160 is used for data integration. The selecting unit 170 is used for model selection.

The training unit 120, the testing unit 130, the ranking unit 140, the normalizing unit 150, the comprehensive calculation unit 160, and the selecting unit 170 are, for example, a circuit, a circuit board, a storage device storing codes, or a chip. The chip is, for example, a central processing unit (CPU), a programmable general-purpose or special-purpose micro control unit (MCU), a microprocessor, a digital signal processor (DSP), a programmable controller, an application specific integrated circuit (ASIC), a graphics processing unit (GPU), an image signal processor (ISP), an image processing unit (IPU), an arithmetic logic unit (ALU), a complex programmable logic device (CPLD), an embedded system, a field programmable gate array (FPGA), other similar element or a combination thereof.

In this embodiment, the system 100 could use various testing datasets DSj to test the plurality of candidate models MD1, and comprehensively evaluate the test results to select the best 2D-to-3D image model MD1*. The selected 2D-to-3D image model MD1* could be widely used in various scenes and with various materials, and is not affected by insufficient training data. The operation of each component is explained in detail below with a flowchart.

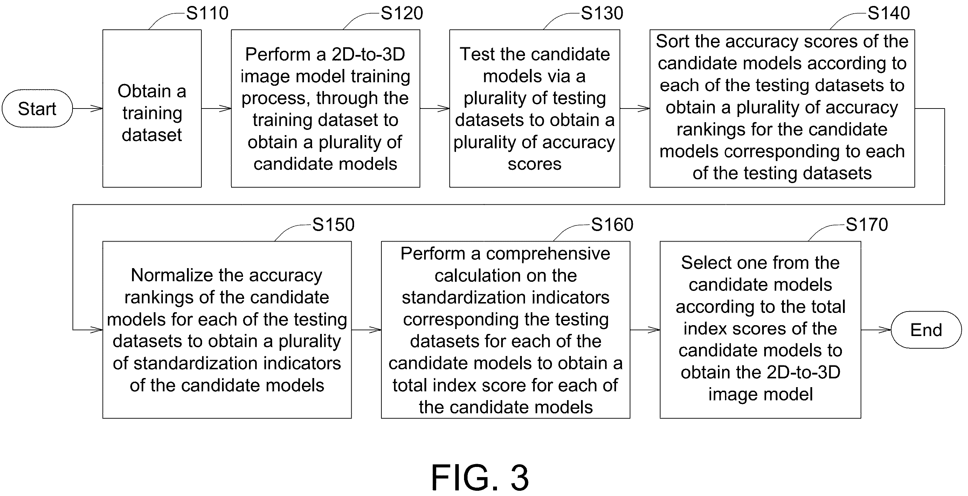

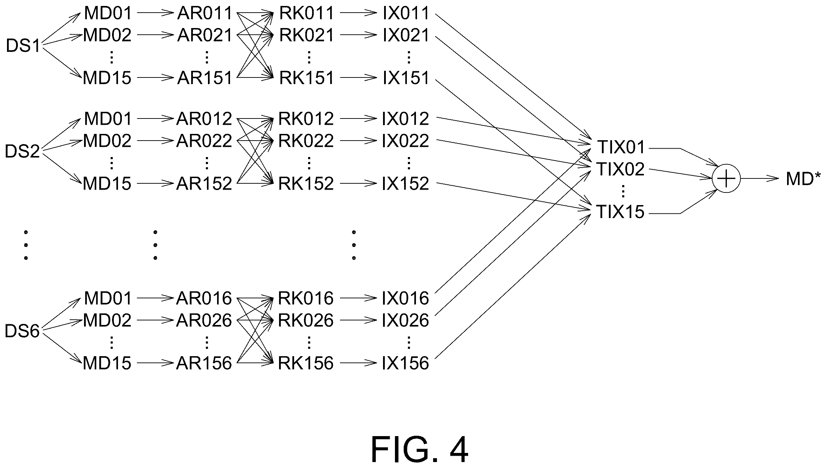

Please refer to Figures 3 and 4. Figure 3 illustrates a flowchart of a method for establishing the widely used 2D-to-3D image model MD* according to an embodiment of this disclosure. Figure 4 illustrates each step of Figure 3. The method for creating the widely used 2D-to-3D image model MD* includes steps S110 to S170.

In step S110, as shown in Figure 2, a training dataset DS0 is obtained from the network or storage device. The training dataset DS0, for example, contains a plurality of 2D images IMt and their corresponding real 3D images PLt*. Currently, stereo cameras or stereoscopic cameras are expensive, and the 3D images that could be obtained are quite scarce. The 3D images that correspond to the 2D images are even scarcer. Therefore, the amount of data in the training dataset DS0 is usually quite limited. Training a model that could be applied to various scenes and materials using scarce data is a very difficult challenge.

Next, in the step S120, as shown in Figure 2, the training unit 120 performs a 2D-to-3D image model training process using the training dataset DS0 in a stochastic optimization manner to obtain several candidate models MDi. These candidate models MDi are, for example, training results obtained at different iteration stages.

Then, in the step S130, as shown in Figure 2, the testing unit 130 tests these candidate models MDi using several testing datasets DSj to obtain several accuracy scores ARij. For example, referring to Table 1 and Figure 4 below, the testing unit 130 tests the 15 candidate models MD01 to MD15 using the testing dataset DS1 to obtain the 15 accuracy scores AR011, AR021, ..., AR151; tests the 15 the candidate models MD01 to MD15 using the testing dataset DS2 to obtain the 15 accuracy scores AR012, AR022, ..., AR152; ...; and tests the 15 candidate models MD01 to MD15 using the testing dataset DS6 to obtain the 15 accuracy scores AR016, AR026, ..., AR156.

**Table 1**

| | Accuracy score ARij | | | | | |
|---|---|---|---|---|---|---|
| | DS1 | DS2 | DS3 | DS4 | DS5 | DS6 |
| MD01 | 0.12315794 | 0.11292253 | 0.31253558 | 16.207865 | 8.866191 | 9.185613 |
| MD02 | 0.11829503 | 0.11241056 | 0.3066481 | 14.629317 | 8.787128 | 9.598586 |
| MD03 | 0.11723378 | 0.11197629 | 0.314804 | 17.103363 | 8.793657 | 9.809728 |
| MD04 | 0.11798605 | 0.11272384 | 0.32431236 | 16.652044 | 8.86684 | 9.6500225 |
| MD05 | 0.11529937 | 0.111418284 | 0.31989908 | 15.568694 | 8.927024 | 9.650841 |
| MD06 | 0.117797986 | 0.110092744 | 0.31475717 | 15.13146 | 8.465606 | 9.557404 |
| MD07 | 0.11661585 | 0.10919146 | 0.3107415 | 14.765324 | 8.489348 | 9.53105 |
| MD08 | 0.11677705 | 0.11166441 | 0.31504762 | 15.096795 | 8.587759 | 9.786102 |
| MD09 | 0.117394984 | 0.11084772 | 0.31923392 | 14.7952175 | 8.432076 | 9.581311 |
| MD10 | 0.1155949 | 0.110629454 | 0.31802925 | 13.502144 | 8.47969 | 9.712787 |
| MD11 | 0.11654868 | 0.1117165 | 0.31373784 | 15.904981 | 8.590853 | 9.670654 |
| MD12 | 0.1156352 | 0.11040323 | 0.30822963 | 15.325508 | 8.7461605 | 9.676683 |
| MD13 | 0.114453055 | 0.111428715 | 0.3322723 | 13.446446 | 8.75893 | 9.732868 |
| MD14 | 0.11718005 | 0.11144393 | 0.33077952 | 15.882201 | 8.377525 | 9.679033 |
| MD15 | 0.11718005 | 0.11144393 | 0.33077952 | 15.882201 | 8.377525 | 9.679033 |

The testing dataset DS1, for example, is the DIW dataset, a Monocular Depth Estimation dataset primarily focused on "outdoor scenes" (i.e., unstructured scenes), suitable for unsupervised learning. The DIW dataset contains over 496K images and provides relative depth annotations (excluding precise depth maps). The DIW dataset includes images from the internet, covering diverse scenes (e.g., urban, indoor, natural environments). Furthermore, the depth annotations in the DIW dataset are "Relative Depth," not absolute depth. The DIW dataset is suitable for unsupervised deep learning and monocular depth estimation.

The DS2 testing dataset, for example, is the ETH3D dataset, a high-precision 3D reconstruction dataset containing stereo and multi-view imagery along with corresponding depth maps. The ETH3D dataset includes 13 indoor scenes and 14 outdoor scenes, featuring high-resolution RGB imagery and accurate depth annotations. Furthermore, the ETH3D dataset provides high-resolution imagery (up to 2448×2048) and offers stereo and LiDAR depth annotations. The ETH3D dataset is suitable for stereo matching and multi-view 3D reconstruction.

The DS3 testing dataset, for example, is the Sintel dataset, primarily derived from the open-source animated film "Sintel". The Sintel dataset is specifically designed for optical flow and depth estimation, and includes synthetic scenes and corresponding depth maps. It contains over 1000 high-quality images, categorized into "Clean" and "Final" versions. Because the images in the Sintel dataset are sourced from animation, they are free of noise and sensor errors. Furthermore, the Sintel dataset includes challenging scenes with motion blur and occlusion. It is suitable for monocular depth estimation, optical flow estimation, and visual SLAM.

The DS4 testing dataset, for example, is the KITTI dataset, collected from autonomous driving scenarios. The KITTI dataset contains monocular, binocular, and LiDAR depth annotations, suitable for autonomous driving research. It includes over 93K RGB images and depth maps (generated by LiDAR). Primarily featuring road scenes, the KITTI dataset is well-suited for autonomous driving applications. Combining data from multiple sensors such as LiDAR, GPS, and IMU, the KITTI dataset is applicable to monocular/binocular depth estimation, visual SLAM, and autonomous driving.

The testing dataset DS5 is, for example, the NYUDv2 dataset, an indoor depth dataset provided by New York University (NYU). The NYUDv2 dataset uses a Kinect sensor to acquire RGB and depth maps. It contains 120,000 RGB-D images covering 464 different scenes. The NYUDv2 dataset primarily consists of indoor scenes (such as offices, classrooms, bedrooms, etc.). The depth data in the NYUDv2 dataset comes from Kinect and is suitable for robot navigation, monocular depth estimation, RGB-D object recognition, and robot vision.

The testing dataset DS6, for example, is the TUM-RGBD dataset, provided by the Technical University of Munich (TUM). The TUM-RGBD dataset is primarily used for visual SLAM, robot navigation, and depth estimation. It contains multiple sequences, each providing RGB images, depth images (from Kinect), and IMU data. The TUM-RGBD dataset is suitable for RGB-D SLAM and object recognition, and provides high-precision ground truth camera poses. Because the depth maps are from Kinect, they contain significant noise, but are still suitable for robotic applications.

To ensure the model can be applied to various scenarios and materials, the scenarios, depth types, and diversity of these testing datasets DS1 to DS6 are not entirely the same. The testing datasets DS1 to DS6 are summarized in Table 2 below.

**Table 2**

| Testing dataset | Scene type | Annotation | Depth type | Accuracy | diversity |
|---|---|---|---|---|---|
| DIW | common | user clicks | ordinal pairs | Low | High |
| ETH3D | common | laser | absolute | High | Low |
| Sintel | common | synthesis | absolute | High | Low |
| KITTI | outdoor | laser / stereoscopic | absolute | medium | low |
| NYUDv2 | indoor | RGB-D | absolute | Medium | Low |
| TUM-RGBD | indoor | RGB-D | absolute | Medium | Low |

In the step S130, different accuracy evaluation methods are used for the testing datasets DSj to obtain the accuracy scores ARij. For example, the accuracy evaluation methods used for the aforementioned testing datasets DS1 to DS6 are shown in Table 3.

**Table 3**

| | DIW | ETH3D | Sintel | KITTI | NYUDv2 | TUM-RGBD |
|---|---|---|---|---|---|---|
| Accuracy evaluation method | WHDR | AbsRel | AbsRel | δ>1.25 | δ>1.25 | δ>1.25 |

The Weighted Human Disagreement Rate (WHDR) is a an accuracy metric for the DIW dataset. This is because the DIW dataset does not provide absolute depth annotations; instead, it evaluates model accuracy through "relative depth relation annotations." A lower WHDR is better, indicating a lower error rate in relative depth relations. Since the DIW dataset lacks absolute depth information, traditional RMSE or AbsRel methods cannot be used; therefore, the WHDR is used to evaluate the model's "depth ranking" ability.

The Absolute Relative Error (AbsRel) is an evaluation metric for monocular depth estimation, applicable to datasets such as ETH3D and Sintel. The AbsRel measures the relative error between the predicted and actual depth; a large error will result in a high AbsRel. A lower AbsRel is better, indicating more accurate depth predictions. AbsRel is suitable for scenes of different scales because it is a "relative error," not an "absolute error."

δ is the percentage of bad pixels used in monocular depth estimation tasks to measure the model's depth prediction performance. This metric assesses the relative error between the predicted and true depth values and calculates the proportion of pixels with errors within a certain threshold range.

Next, in the step S140, as shown in Figure 2, the ranking unit 140 sorts the accuracy scores ARij of the candidate models MDi according to each of the testing datasets DSj, so as to obtain a plurality of accuracy rankings RKij of the candidate models MDi corresponding to each of the testing datasets DSj. For example, referring to Table 4 and Figure 4 below, the ranking unit 140 sorts the 15 accuracy scores AR011, AR021, ..., AR151 of the 15 candidate models MD01 to MD15 according to the testing dataset DS1 to obtain 15 accuracy rankings RK011, RK021, ..., RK151 corresponding to the testing dataset DS1; sorts the 15 accuracy scores AR012, AR022, ..., AR152 of the 15 candidate models MD01 to MD15 according to the testing dataset DS2 to obtain the 15 accuracy rankings RK012, RK022, ..., RK152 corresponding to the corresponding testing dataset DS2; ...; sorts the 15 accuracy scores AR016, AR026, ..., AR156 of the 15 candidate models MD01 to MD15 according to the testing dataset DS6 to obtain the 15 accuracy rankings RK016, RK026, ..., RK156 corresponding to the corresponding testing dataset DS6.

**Table 4**

| | Accuracy ranking RKij | | | | | |
|---|---|---|---|---|---|---|
| | DS1 | DS2 | DS3 | DS4 | DS5 | DS6 |
| MD01 | 15 | 15 | 4 | 13 | 13 | 1 |
| MD02 | 14 | 13 | 1 | 3 | 11 | 5 |
| MD03 | 10 | 12 | 7 | 15 | 12 | 15 |
| MD04 | 13 | 14 | 12 | 14 | 14 | 6 |
| MD05 | 2 | 6 | 11 | 9 | 15 | 7 |
| MD06 | 12 | 2 | 6 | 7 | 4 | 3 |
| MD07 | 6 | 1 | 3 | 4 | 6 | 2 |
| MD08 | 7 | 10 | 8 | 6 | 7 | 14 |
| MD09 | 11 | 5 | 10 | 5 | 3 | 4 |
| MD10 | 3 | 4 | 9 | 2 | 5 | 12 |
| MD11 | 5 | 11 | 5 | 12 | 8 | 8 |
| MD12 | 4 | 3 | 2 | 8 | 9 | 9 |
| MD13 | 1 | 7 | 15 | 1 | 10 | 13 |
| MD14 | 8 | 8 | 13 | 10 | 1 | 10 |
| MD15 | 9 | 9 | 14 | 11 | 2 | 11 |

Then, in the step S150, as shown in Figure 2, the normalizing unit 150 normalizes the accuracy rankings RKij of the candidate models MDi for each of the testing datasets DSj, so as to obtain a plurality of standardization indicators IXij of the candidate models MDi for each of the testing datasets DSj. For example, referring to Table 5 and Figure 4 below, the normalizing unit 150 normalizes the 15 accuracy rankings RK011, RK021, ..., RK151 of the 15 candidate models MD01 to MD15 for the testing dataset DS1 to obtain 15 standardization indicators IX011, IX021, ..., IX151 of the 15 candidate models MD01 to MD15; and normalizes the 15 accuracy rankings RK012, RK022, ..., RK152 of the 15 candidate models MD01 to MD15 for the testing dataset DS2 to obtain 15 standardization indicators IX012, IX022, ..., IX152 of the 15 candidate models MD01 to MD15; normalizes the 15 accuracy rankings RK01, RK026, ..., RK156 of the 15 candidate models MD01 to MD15 for the testing dataset DS6 to obtain the 15 standardization indicators IX016, IX026, ..., IX156 of the 15 candidate models MD01 to MD15.

**Table 5**

| | Standardization indicator IXij | | | | | | Total index score TIXi |
|---|---|---|---|---|---|---|---|
| | DS1 | DS2 | DS3 | DS4 | DS5 | DS6 | |
| MD01 | 1 | 1 | 8 | 2 | 2 | 10 | 24 |
| MD02 | 2 | 2 | 10 | 9 | 4 | 8 | 35 |
| MD03 | 4 | 3 | 6 | 1 | 3 | 1 | 18 |
| MD04 | 2 | 2 | 3 | 2 | 2 | 7 | 18 |
| MD05 | 10 | 7 | 4 | 5 | 1 | 6 | 33 |
| MD06 | 3 | 10 | 7 | 6 | 8 | 9 | 43 |
| MD07 | 7 | 10 | 9 | 8 | 7 | 10 | 51 |
| MD08 | 6 | 4 | 6 | 7 | 6 | 2 | 31 |
| MD09 | 4 | 8 | 4 | 8 | 9 | 8 | 41 |
| MD10 | 9 | 8 | 5 | 10 | 8 | 3 | 43 |
| MD11 | 8 | 4 | 8 | 3 | 6 | 6 | 35 |
| MD12 | 8 | 9 | 10 | 6 | 5 | 5 | 43 |
| MD13 | 10 | 6 | 1 | 10 | 4 | 2 | 33 |
| MD14 | 6 | 6 | 2 | 4 | 10 | 4 | 32 |
| MD15 | 6 | 6 | 2 | 4 | 10 | 4 | 32 |

Next, in the step S160, as shown in Figure 2, the comprehensive calculation unit 160 performs a comprehensive calculation on the standardization indicators IXij corresponding the testing datasets DSj for each of the candidate models MDi to obtain a total index score TIXi for each of the candidate models MDi. For example, referring to Table 5 and Figure 4, the comprehensive calculation unit 160 performs the comprehensive calculation on the six standardization indicators IX011, IX012, ..., IX016 corresponding the six testing datasets DS1 to DS6 for the candidate model MD01, to obtain a total index score TIX01 for the candidate model MD01; performs the comprehensive calculations on the six standardization indicators IX021, IX022, ..., IX026 corresponding the six testing datasets DS1 to DS6 for the candidate model MD02, to obtain a total index score TIX02 for the candidate model MD02; ...; performs the comprehensive calculations on the six standardization indicators IX151, IX152, ..., IX156 corresponding the six testing datasets DS1 to DS6 for the candidate model MD15, to obtain a total index score TIX15 for the candidate model MD15.

Next, in the step S170, as shown in Figure 2, the selecting unit 170 selects one from the candidate models MDi according to their total index scores TIXi to obtain a 2D-to-3D image model MD*. For example, as shown in Table 5 and Figure 4, the selecting unit 170 selects one from the 15 candidate models MD01 to MD15 according to the 15 total index scores TIX01, TIX02, ..., TIX15 to obtain an optimal 2D-to-3D image model MD*.

According to the above embodiments, this disclosure, through testing and evaluation on various different testing datasets DSj, could train and evaluate the 2D-to-3D image model MD* that could be widely used in various different scenarios and with various different materials, under the limited training dataset DS0.

The above disclosure provides various features for implementing some implementations or examples of the present disclosure. Specific examples of components and configurations (such as numerical values or names mentioned) are described above to simplify/illustrate some implementations of the present disclosure. Additionally, some embodiments of the present disclosure may repeat reference symbols and/or letters in various instances. This repetition is for simplicity and clarity and does not inherently indicate a relationship between the various embodiments and/or configurations discussed.

It will be apparent to those skilled in the art that various modifications and variations can be made to the disclosed embodiments. It is intended that the specification and examples be considered as exemplars only, with a true scope of the disclosure being indicated by the following claims and their equivalents.

## Claims

1. A method for establishing a 2D-to-3D image model (MD*), **characterized in that** the method for establishing the 2D-to-3D image model (MD*) comprises:
obtaining a training dataset (DSO);
performing a 2D-to-3D image model training process, through the training dataset (DSO) to obtain a plurality of candidate models (MDi);
testing the candidate models (MDi) via a plurality of testing datasets (DSj) to obtain a plurality of accuracy scores (ARij);
sorting the accuracy scores (ARij) of the candidate models (MDi) according to each of the testing datasets (DSj) to obtain a plurality of accuracy rankings (RKij) for the candidate models (MDi) corresponding to each of the testing datasets (DSj);
normalizing the accuracy rankings (RKij) of the candidate models (MDi) for each of the testing datasets (DSj) to obtain a plurality of standardization indicators (IXij) of the candidate models (MDi);
performing a comprehensive calculation on the standardization indicators (IXij) corresponding the testing datasets (DSj) for each of the candidate models (MDi) to obtain a total index score (TIXi) for each of the candidate models (MDi); and
selecting one from the candidate models (MDi) according to the total index scores (TIXi) of the candidate models (MDi) to obtain the 2D-to-3D image model (MD*).

2. The method for establishing the 2D-to-3D image model according to claim 1, wherein the testing datasets are not duplicated.

3. The method for establishing the 2D-to-3D image model according to claim 1, wherein the testing datasets have different scenarios.

4. The method for establishing the 2D-to-3D image model according to claim 1, wherein the testing datasets have different depth forms.

5. The method for establishing the 2D-to-3D image model according to claim 1, wherein the testing datasets have different diversities.

6. The method for establishing the 2D-to-3D image model according to claim 1, wherein the accuracy scores are obtained by different accuracy evaluation methods on the testing datasets.

7. The method for establishing the 2D-to-3D image model according to claim 1, wherein the testing datasets include a Depth in Wild (DIW) dataset, an ETH3D dataset, a Sintel dataset, a KITTI dataset, an NYUDv2 dataset, and a TUM-RGBD dataset.

8. The method for establishing the 2D-to-3D image model according to claim 1, wherein in the step of performing the comprehensive calculation on the standardization indicators corresponding the testing datasets, the comprehensive calculation is an addition operation.

9. A system (100) for establishing a 2D-to-3D image model (MD*), charactered in that the system comproses:
a training unit (120), used to perform a 2D-to-3D image model training process through a training dataset (DS0) with random optimization to obtain a plurality of candidate models (MDi);
a testing unit (130), used to test the candidate models (MDi) via a plurality of testing datasets (DSj) to obtain a plurality of accuracy scores (ARij);
a ranking unit (140), used to sort the accuracy scores (ARij) of the candidate models (MDi) according to each of the testing datasets (DSj) to obtain a plurality of accuracy rankings (RKij) for the candidate models (MDi) corresponding to each of the testing datasets (DSj);
a normalizing unit (150), used to normalize the accuracy rankings (RKij) of the candidate models (MDi) for each of the testing datasets (DSj) to obtain a plurality of standardization indicators (IXij) of the candidate models (MDi);
a comprehensive calculation unit (160), used to perform a comprehensive calculation on the standardization indicators (IXij) corresponding the testing datasets (DSj) for each of the candidate models (MDi) to obtain a total index score (TIXi) for each of the candidate models (MDi); and
a selecting unit (170), used to select one from the candidate models (MDi) according to the total index scores (TIXi) of the candidate models (MDi) to obtain the 2D-to-3D image model (MD*).

10. The system for establishing the 2D-to-3D image model according to claim 9, wherein the testing datasets are not duplicated.

11. The system for establishing the 2D-to-3D image model according to claim 9, wherein the testing datasets have different scenarios.

12. The system for establishing the 2D-to-3D image model according to claim 9, wherein the testing datasets have different depth forms.

13. The system for establishing the 2D-to-3D image model according to claim 9, wherein the testing datasets have different diversities.

14. The system for establishing the 2D-to-3D image model according to claim 9, wherein the accuracy scores are obtained by different accuracy evaluation methods on the testing datasets.

15. The system for establishing the 2D-to-3D image model according to claim 9, wherein the testing datasets include a Depth in Wild (DIW) dataset, an ETH3D dataset, a Sintel dataset, a KITTI dataset, an NYUDv2 dataset, and a TUM-RGBD dataset.
